# EUROPÄISCHE PATENTANMELDUNG

(11) **EP 4 592 335 A1**
(43) Veröffentlichungstag der Anmeldung: **30.07.2025**
(21) Anmeldenummer: 24153368.6
(22) Anmeldetag: 23.01.2024
(51) Int. Cl.: C08J 3/22, C08K 5/00, C08L 23/00, C08L 23/06, C08L 23/10, C08L 77/00, C09B 57/00, C08J 3/20

(54) **PIGMENTKONZENTRATE**

(71) Anmelder: Lifocolor Farben GmbH & Co. KG, 96215 Lichtenfels (DE)
(72) Erfinder: FABIAN, Martin, 96120 Bischberg (DE); MEIXNER, Marco, 96250 Ebensfeld (DE)
(74) Vertreter: Fabry, Bernd

(57) **Zusammenfassung**

Vorgeschlagen werden Pigmentkonzentrate enthaltend oder bestehend aus
(a) mindestens einem Farbpigment;
(b) mindestens einem Polyolefin sowie gegebenenfalls
(c) mindestens einem Dispergator.

## Beschreibung

### Gebiet der Erfindung

Die Erfindung befindet sich auf dem Gebiet der Farbpigmente und betrifft neue Zubereitungen für Rot-, Gelb- und Orangepigmente mit verbesserter Stabilität.

### Technologischer Hintergrund

Die Massefärbung von Polyamiden mit brillanten Orange- und Rot-Tönen ist seit der Verbannung der Cadmiumsulfid-Pigmente (SVHC-Stoffe) eine anwendungstechnische Herausforderung. Viele Farbtöne im Rot- und Orange-Bereich sind entweder nur mit sehr hohen Kosten (beispielsweise unter Einsatz von Seltenen-Erden-Pigmenten) oder gar nicht in der gewünschten Brillanz realisierbar, insbesondere wenn hohe Echtheitseigenschaften gefordert werden. Hintergrund ist die polare Schmelze des Polyamids in Verbindung mit ihrer chemischen Reaktivität. Die meisten der marktüblichen Pigmente werden durch die PolyamidSchmelze chemisch abgebaut oder sie lösen sich in ihre molekularen Bestandteile auf und verändern dabei unkontrolliert ihren Farbton und ihre anwendungstechnischen Eigenschaften.

### Stand der Technik

DE1694487 A1 (ICI) beschreibt pigmentierte Polyamide, die durch Polymerisation einer Mischung aus 90 bis 99A5 Gew.-% Hexamethylendiammoniumadipat und 0A5 bis 10 Gew.-% Caprolactam in Gegenwart eines organischen Pigments hergestellt werden. Als Pigmente kommen Chinacridon-, Phthalocyanin- und Perylenpigmente in Frage, z. B. Kupferphthalocyanin oder das Bis-N,N1-(31,51-dimethylphenyl)imid der Perylen-3,4,9,10-tetracarbonsäure.

EP1560877 B1 (BASF) betrifft ein Verfahren zur Herstellung eines Polyamids, das Titandioxidpigmente enthält, wobei die Titandioxidpigmente in einem Ausgangsgemisch dispergiert werden, das Wasser und Caprolactam enthält.

CN115594989 A (WOOCO PIGMENTS) offenbart ein Verfahren zur Herstellung einer Polyamidpigmentpräparation. Das Polyamidharz wird durch Polymerisation von Dicarbonsäure und Diamin bei hoher Temperatur in Gegenwart einer Phosphorverbindung hergestellt. Anschließend werden die Polymere mit einem Farbsand vermischt.

JP2169736 A2 (ASAHI) hat Nylon 66 zum Gegenstand, dessen Hauptkette aus Amidbindungen besteht, welches ferner e0,25 bis 1,25 Gew.-% eines Rotpigments auf Perylenbasis enthält.

### Aufgabe der Erfindung

Die Aufgabe der vorliegenden Erfindung hat daher darin bestanden, neue Orange- und/oder Rotpigmente speziell für die Massefärbung von Polyamiden zur Verfügung zu stellen, die frei von den oben geschilderten Nachteilen sind und insbesondere im Verarbeitungsprozess einen brillanten und stabilen Farbeindruck vermitteln.

### Beschreibung der Erfindung

Ein erster Gegenstand der Erfindung betrifft Pigmentkonzentrate enthaltend oder bestehend aus
(a) mindestens einem Farbpigment;
(b) mindestens einem Polyolefin sowie gegebenenfalls
(c) mindestens einem Dispergator.

Überraschenderweise wurde gefunden, dass das Einarbeiten der genannten Farbpigmente in eine Polyolefinmatrix die Stabilität der komplexen organischen Substanzen signifikant verbessert und es insbesondere zu keinem chemischen Abbau und Farbveränderungen kommt, wenn diese beispielsweise in Polyamid oder Polyamid-Masterbatches eingearbeitet werden. Nicht zu erwarten war dabei insbesondere, dass sich auf diese Weise auch bereits bekannte Pigmente verarbeiten lassen, die wegen ihrer unzureichenden Stabilität bereits als für die Anwendung speziell in Polyamiden ungeeignet angesehen wurden. Die Mengen an Polyolefinen, die mit den Pigmenten in die zu färbenden Werkstoffe, insbesondere Polyamide, gelangen, sind dabei ferner so gering, dass sie die Eigenschaften der Werkstoffe nicht negativ beeinflussen.

### Farbpigmente

Bei den Farbpigmenten, die im Sinne der Erfindung eingesetzt werden können, handelt es sich um Rotpigmente, Gelbpigmente, Orangepigmente sowie deren Mischungen. Hierbei haben sich zwei an sich bereits bekannte Pigmente als besonders geeignet erwiesen, nämlich zum einen
- **Rot 254:** 3,6-Bis(4-chlorophenyl)-2,5-dihydropyrrolo[3,4-c]pyrrole-1,4-dione (CAS 84632-65-5) mit folgender Strukturformel: 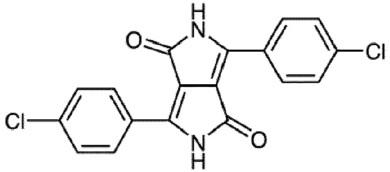 sowie
- **Orange 72:** 2,2'-((3,3'-dichloro(1,1'-biphenyl)-4,4'-diyl)bis(2,1-;2,2'-[(3,3'-dichlorobiphe-nyl-4,4'-diyl)di(E)diazene-2,1-diyl]bis[3-oxo-N-(2-oxo-2,3-dihydro-1H-benzimidazol-5-yl)butanamide] (CAS 78245-94-0) mit folgender Strukturformel:

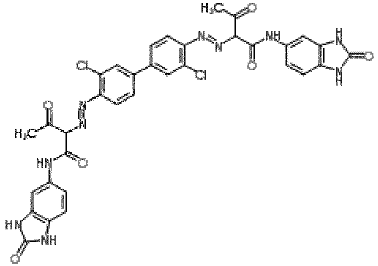

DiePigmente sind von unterschiedlichen Herstellern (z.B. Heubach, Sun Chemical, Cinic) im Markt erhältlich. Die Pigmentkonzentrate können jeweils nur ein Pigment enthalten; man spricht dann von Monokonzentraten oder "Single Pigment Concentrate" (SPC). Möglich sind jedoch auch Mischungen verschiedener Farbpigmente, die andere Farbtöne aufweisen können.

### Polyolefine

Der Kern der Erfindung besteht darin, die Farbpigmente gegen chemische bzw. lichtinduzierte Zersetzung zu schützen, indem man sie in eine Polyolefinmatrix einbettet. Hierbei kann es sich beispielsweise um Polyolefine handeln, die ausgewählt sind aus der Gruppe, die gebildet wird von Polyethylen, wie z.B. HD-Polyethylenen, LD-Polyethylenen und Polypropylenen.

### Dispergatoren

Vorzugsweise können die Konzentrate weiterhin Dispergatoren enthalten, die beispielsweise ausgewählt sind aus der Gruppe, die gebildet wird von Polyolefin-, Montan- oder Amidwachsen sowie Poly(meth)acrylverbindungen und Stearaten

### Konzentrate

In einer bevorzugten Ausführungsform der Erfindung können die Konzentrate die Komponenten (a) bis (c) in folgenden Mengen enthalten:
(a) etwa 1 bis etwa 50 Gew.-%, vorzugsweise etwa 2 bis etwa50und insbesondere etwa 20-bis etwa 50 Gew.-% Farbpigmente;
(b) etwa 50 bis etwa 99 Gew.-%, vorzugsweise etwa 70 bis etwa 98 und insbesondere etwa 40 bis etwa 60 Gew.-% Polyolefine; sowie
(c) 0 bis etwa 20 Gew.-% und vorzugsweise etwa 5 bis etwa 15Gew.-% Dispergatoren,
   mit der Maßgabe, dass sich die Mengenangaben zu 100 Gew.-% ergänzen.

Um Missverständnisse zu vermeiden sei darauf hingewiesen, dass Zusammensetzungen, die sich zu mehr als 100 Gew.-% oder weniger als 100 Gew.-% addieren, nicht Gegenstand der Erfindung sind. Der Fachmann ist ferner ohne Weiteres in der Lage, innerhalb der Gesamtoffenbarung der vorliegenden Patentanmeldung Zusammensetzungen zu ermitteln, die die technische Lehre erfüllen, ohne dazu selbst erfinderisch tätig werden zu müssen.

### Herstellverfahren

Ein weiterer Gegenstand der Erfindung betrifft ein Verfahren zur Herstellung eines Pigment-Masterbatches, bestehend oder umfassend die folgenden Schritte:
(i) Bereitstellen von mindestens einem Farbpigment;
(ii) Bereitstellen von mindestens einem Polyolefin sowie gegebenenfalls
(iii) Bereitstellen von mindestens einem Dispergator;
(iv) Aufschmelzen des mindestens einen Polyolefins über seinen Erweichungspunkt;
(v) Eindosieren des mindestens einen Farbpigments sowie gegebenenfalls des mindestens einen Dispergators;
(vi) Homogenisieren des Ansatzes durch Einbringen von Scherenergie, insbesondere durch Extrudieren oder Kneten
(vii) Abkühlen der Masse.

Vorzugsweise wird das Verfahren so geführt, dass man in dem Masterbatch eine Pigmentkonzentration von etwa 1 bis etwa 50 Gew.-%, vorzugsweise etwa 2 bis etwa 30 Gew.-% und insbesondere etwa 20 bis etwa 50 Gew.-% einstellt. Die Durchführung des Verfahrens liegt im allgemeinen Erfahrungsbereich des zuständigen Fachmanns und kann beispielsweise in einem beheizbaren Rührkessel durchgeführt werden.

### Polyamide

Zwei weitere Gegenstände der vorliegenden Erfindung betreffen Polyamidwerkstücke, einschließlich Fasern, die die vorstehend identifizierten Pigmentkonzentrate enthalten, wobei Mengen von etwa 0,5 bis etwa 10 Gew.-% und insbesondere etwa 1 bis etwa 5 Gew.-% bevorzugt sind. Beispiele für Werkstücke auf Basis von Polyamiden sind neben den bereits genannten Fasern vor allem Haushaltsgegenstände und technische Teile, die sehr abriebfest sein müssen, wie Dübel, Schrauben, Gehäuse, Gleitlager, Isolatoren im Bereich Elektrotechnik, Kabelbinder, Klebesockel, Steckverbindungen, Stecker, Gehäusteile für elektronische Geräte, Kunststoffteile für Elektroinstallationen in Fahrzeugen und batteriebetriebenen Anlagen Knotenstücke für Sanitätszelte, Küchenutensilien (Kellen, Löffel), Maschinenteile (Abdeckungen, Zahnräder, Lager, Laufrollen) und Zahnbürsten-Borsten. Aufgrund der Beständigkeit gegen Schmier- und Kraftstoffe bei Temperaturen bis über 150 °C kommen auch Anwendungen im Fahrzeugbau in Frage, beispielsweise für Motorenbauteile wie Ansaugsysteme, Kraftstoffleitungen, Motorabdeckungen, Ölwannen und für Druckluftsysteme wie Fahrwerk und Bremsen.

### Gewerbliche Anwendbarkeit

Ein weiterer Gegenstand der Erfindung betrifft ein Verfahren zur Herstellung eines Polyamidwerkstücks, bei dem man ein Polyamid-Masterbatch mit einer Menge der vorstehend identifizierten Pigmentkonzentrate versetzt, homogenisiert und dann in eine Form bringt.

Weiterhin beansprucht wird die Verwendung der vorstehend identifizierten Pigmentkonzentrate zur Herstellung von Masterbatchen sowie die Verwendung dieser für die Einfärbung von Polyamid geeigneten Masterbatches zur Herstellung von Werkstücken einschließlich Fasern.

Ebenfalls beansprucht wird die Verwendung von Polyolefinen zur Stabilisierung von Farbpigmenten, speziell Rot 254 und Orange 72, gegen einen chemischen Abbau beim Einsatz in Polyamiden.

Es sei darauf hingewiesen, dass die vorstehend genannten bevorzugten Ausführungsformen, Mischungen, Mengenangaben und dergleichen auch für die oben genannten Verfahren und Verwendungen zutreffen, so dass sich eine Wiederholung erübrigt.

### BEISPIELE

### Beispiel 1

### Pigmentkonzentrat mit Rot 254

Ein Ansatz umfassend 4,5 kg LD-PE, 1,5 kg Polymer-Wachs und 4 kg des Pigments Reds 254 wurde in einem Schnellmischer vorgemischt und anschließend in einem Doppelwellenextruder bei 160 °C verarbeitet, im Wasserbad abgekühlt und stranggranuliert.

### Beispiel 2

### Pigmentkonzentrat mit Orange 72

Ein Ansatz umfassend 4,5 kg LD-PE, 1,5 kg Polymer-Wachs und 4 kg des Pigments Orange 72 wurde in einem Schnellmischer vorgemischt und anschließend in einem Doppelwellen-extruder bei 160 °C verarbeitet, im Wasserbad abgekühlt und stranggranuliert.

### Beispiel 3 - Vergleichsbeispiel V1

### Anwendungstechnische Beurteilung

Je ein Ansatz mit 10 kg Polyamid wurde aufgeschmolzen und mit 200 g nicht-stabilisiertem Pigment Red 254 sowie mit 500 g des nach Beispiel 1 gewonnenen Monokonzentrats durch Extrusion homogenisiert und im Spritzgussverfahren zu einem Werkstück verarbeitet.
Dieses Werkstück wurde später mit anderen Komponenten zu einem komplexeren Kunststoffgerät assembliert, welches im dauerhaften Außeneinsatz der Bewitterung ausgesetzt war. Die Polyamid-Prüfkörper wurden über 6 Wochen in einem Bewitterungsgerät (Licht, Wärme, Wasser) ausgesetzt und anschließend auf ihre Beständigkeit untersucht.
Während der Einfärbeversuch mit dem nicht stabilisierten Produkt bereits im ersten Schritt bei der Einarbeitung des Pigments in die Polyamidmatrix scheiterte, weil sich das Pigment farblich veränderte, erwies sich das mit dem erfindungsgemäßen Konzentrat eingefärbte Masterbatch auch während des Spritzgussverfahrens als koloristisch stabil. Im folgenden Bewitterungstest erreichte es die für die Pigmentchemie übliche hohe Farbechtheit.

## Patentansprüche

1. Pigmentkonzentrate enthaltend oder bestehend aus
(a) mindestens einem Farbpigment;
(b) mindestens einem Polyolefin sowie gegebenenfalls
(c) mindestens einem Dispergator.

2. Konzentrate nach Anspruch 1, **dadurch gekennzeichnet, dass** das Farbpigment, ein Rotpigment, ein Gelbpigment oder ein Orangepigment oder deren Mischung ist.

3. Konzentrate nach den Ansprüchen 1 und/oder 2, **dadurch gekennzeichnet, dass** die Farbpigmente ausgewählt sind aus der Gruppe, die gebildet wird von
- 3,6-Bis(4-chlorophenyl)-2,5-dihydropyrrolo[3,4-c]pyrrole-1,4-dion und
- 2,2'-((3,3'-dichloro(1,1'-biphenyl)-4,4'-diyl)bis(2,1-;2,2'-[(3,3'-dichlorobiphenyl-4,4'-diyl)di(E)diazene-2,1-diyl]bis[3-oxo-N-(2-oxo-2,3-dihydro-1H-benzimidazol-5-yl)butanamide] sowie deren Mischungen.

4. Konzentrate nach mindestens einem der Ansprüche 1 bis 3, **dadurch gekennzeichnet, dass** die Polyolefine ausgewählt sind aus der Gruppe, die gebildet wird von HD-Polyethylenen, LD-Polyethylenen und Polypropylenen.

5. Konzentrate nach mindestens einem der Ansprüche 1 bis 4, **dadurch gekennzeichnet, dass** die Dispergatoren ausgewählt sind aus der Gruppe, die gebildet wird von Polyolefinwachsen, Polyamidwachsen sowie Poly(meth)acrylverbindungen und Stearate

6. Konzentrate nach mindestens einem der Ansprüche 1 bis 5, **dadurch gekennzeichnet, dass** sie die Komponenten (a) bis (c) in folgenden Mengen enthalten:
(a) etwa 1 bis etwa 50 Gew.-% Farbpigmente;
(b) etwa 40 bis etwa70 Gew.-% Polyolefine; sowie
(c) 2 bis etwa 15 Gew.-% Dispergatoren,
mit der Maßgabe, dass sich die Mengenangaben zu 100 Gew.-% ergänzen.

7. Verfahren zur Herstellung eines Pigment-Masterbatches, bestehend oder umfassend die folgenden Schritte:
(i) Bereitstellen von mindestens einem Farbpigment;
(ii) Bereitstellen von mindestens einem Polyolefin sowie gegebenenfalls
(iii) Bereitstellen von mindestens einem Dispergator;
(iv) Aufschmelzen des mindestens einen Polyolefins über seinen Erweichungspunkt;
(v) Eindosieren des mindestens einen Farbpigments sowie des gegebenenfalls mindestens einen Dispergators;
(vi) Homogenisieren des Ansatzes durch Einbringen von Scherenergie und
(vii) Abkühlen der Masse.

8. Verfahren nach Anspruch 7, **dadurch gekennzeichnet, dass** man in dem Masterbatch eine Pigmentkonzentration von etwa 1 bis etwa 50 Gew.-% einstellt.

9. Polyamidwerkstücke enthaltend die Pigmentkonzentrate nach mindestens einem der Ansprüche 1 bis 6.

10. Polyamidfasern enthaltend die Pigmentkonzentrate nach mindestens einem der Ansprüche 1 bis 6.

11. Werkstück oder Beschichtung nach den Ansprüchen 9 und/oder 10, **dadurch gekennzeichnet, dass** sie die Pigmentkonzentrate in Mengen von etwa 0,5 bis etwa 10 Gew.-% enthalten.

12. Verfahren zur Herstellung Polyamidwerkstücken, bei dem man ein Polyamid-Masterbatch mit einer Menge der Pigmentkonzentrate nach mindestens einem der Ansprüche 1 bis 6 versetzt, homogenisiert und dann in eine Form bringt.

13. Verwendung von Pigmentkonzentrate nach mindestens einem der Ansprüche 1 bis 6 zur Herstellung von Polyamid-Masterbatchen.

14. Verwendung von Masterbatchen für die Polyamideinfärbung mit einem Gehalt von Pigmentkonzentraten nach mindestens einem der Ansprüche 1 bis 6 zur Herstellung von Werkstücken und Fasern.

15. Verwendung von Polyolefinen zur Stabilisierung von Farbpigmenten gegen einen chemischen Abbau beim Einsatz in Polyamiden.
